# EUROPÄISCHE PATENTSCHRIFT

(11) **EP 1 271 001 B1**
(45) Veröffentlichungstag und Bekanntmachung des Hinweises auf die Patenterteilung: **23.04.2008**
(21) Anmeldenummer: 02013868.1
(22) Anmeldetag: 21.06.2002
(51) Int. Cl.: F16H 55/14, F16H 55/16

(54) **Geräuschgedämpftes Zahnrad**
Low-noise gear wheel
Engrenage à amortissement de bruit

(30) Priorität: 22.06.2001 DE 10130254
(43) Veröffentlichungstag der Anmeldung: 02.01.2003
(73) Patentinhaber: Oechsler Aktiengesellschaft, 91522 Ansbach (DE)
(72) Erfinder: Fey, Rainer, 97422 Schweinfurt (DE)
(74) Vertreter: Führing, Dieter

(56) Entgegenhaltungen:
- DE-A1- 2 430 645
- DE-A1- 3 325 781
- US-A- 3 843 188
- US-A- 4 384 498
- PATENT ABSTRACTS OF JAPAN Bd. 1998, Nr. 02, 30. Januar 1998 (1998-01-30) & JP 09 273618 A (MITSUBISHI MOTORS CORP), 21. Oktober 1997 (1997-10-21)

## Beschreibung

Die Erfindung betrifft die Ausgestaltung eines Zahnrades gemäß dem Oberbegriff des Anspruches 1.

Ein derartiges Zahnrad ist aus der DE 24 30 645 A1 als Stahlzahnrad mit Evolventenverzahnung für ein Getriebe zur rotatorischen Kraftübertragung bekannt. Dort weist jeder Zahn des treibenden Zahnrades eine zur Radachse parallele Durchbrechung auf, und zwar in der Umgebung des radialen Abstandes seines Berührungspunktes mit einem zu treibenden Zahn, der seinerseits mit einem radial geschlitzten Zahnkopf ausgestaltet ist. Die Durchbrechung im treibenden Zahn erstreckt sich nach Art eines Langloches mit abgerundeten Stirnbereichen längs der radialen Symmetrielinie der Zahnflankengeometrie, wobei die Längsseiten des Langloches etwa parallel zur Flanke des Zahnes verlaufen. Davon wird erwartet, daß zu Beginn des Impulsaustauschvorganges, unmittelbar vor Eintritt der Lastübernahme seitens des angetriebenen Zahnes, infolge der geschwächten Zahnquerschnittsfläche eine gewisse elastische Zahnverformung des treibenden Zahnes eintritt. Diese Verformung soll akustisch störende Prallschwingungen dämpfen, die auf den Eingriffsstoß folgen, ehe dann die Zahnpaarung mit der Lastübergabe zum Einsetzen von Drehschwingungen führt.

Es mag sein, daß bei Getrieben mit Stahlzahnrädern herkömmlicher Zahngeometrie solche Langlöcher im treibenden Zahnrad tatsächlich zu einer gewissen Geräuschminderung führen - bei hochtourig laufenden kleinbauenden Kunststoffgetrieben aber, die wegen der kleinen Raddurchmesser üblicherweise mit der geringen Zähnezahl für Überdeckungsgrade kleiner als zwei (d.h. nur ein Zahn trägt) und dafür mit gegenüber der Evolventengeometrie verlängerten Zähnen ausgestaltet sind, mußte festgestellt werden, daß die vorbeschriebenen Maßnahmen keine nennenswerte Geräuschminderung erbringen.

Der Erfindung lag deshalb die technische Problemstellung zugrunde, besser geräuschgedämpfte Spritzguß-Zahnräder für hochtourige kleinbauende Kunststoffgetriebe zu schaffen.

Diese Aufgabe konnte überraschenderweise dadurch gelöst werden, daß die bei üblich konfigurierten Stahlzahnrädern vorgesehenen aber in Kunststoffgetrieben nutzlosen Maßnahmen (nämlich der Langlöcher in den Zähnen) für aus Kunststoff gespritzte treibende Zahnräder erfindungsgemäß zu den kreisrunden Durchbrechungen gemäß dem Hauptanspruch modifiziert wurden.

Die verblüffend erfolgreiche Wirkung dieser Zahnradauslegung beruht wahrscheinlich darauf, daß die Zahnschwächung sich nun nicht mehr als Langloch über einen nicht unerheblichen Teil der gesamten Zahnhöhe erstreckt, was wohl zu einer starken Zahnverformung infolge Lastübernahme noch im elastischen Bereich des Langloches führte. Diese Verformung ihrerseits erstreckte sich wohl über einen derart großen Drehwinkel, daß der nächste getriebene Zahn seiner Teilung gegenüber so deutlich versetzt eingriff, daß er (also bei der vorbekannten Auslegung der Durchbrechung als Langloch) zur zusätzlichen Geräuschquelle wurde. Weil die Durchbrechung aber erfindungsgemäß nun nur noch im wesentlichen kreislochförmig in unmittelbarer Nachbarschaft des Eingriffspunktes an der Zahnflanke des treibenden Rades auftritt, kann selbst ein verlängerter Zahn sich nun nicht mehr so stark unter der Lastübergabe verbiegen, wie im Falle der bekannten Schwächung durch ein in Längsrichtung des Zahnes sich erstreckendes Langloch; mit der Folge, daß nun der nächstfolgende getriebene Zahn teilungsgerecht gerade im örtlich geschwächten Bereich und dadurch geräuschgedämpft eingreift, ehe es dann zur eigentlichen Lastübernahme im gleich benachbarten nichtelastischen Bereich kommt.

Die Weiterbildung einer achsparallel konischen Verjüngung der erfindungsgemäßen Lochgestaltung fördert nicht nur das Entformen nach dem Spritzgußvorgang, sondern hat im Betrieb dann auch zur Folge, daß der in der Ebene des größeren Konus-Durchmessers stärker geschwächte Querschnittsbereich bei Anlage des getriebenen Zahnes unter Belastung zunächst eher zu einer punktförmigen Anlage im steiferen Längsschnittbereich der Zahnflanke führt und dann gegenüber dem axial benachbarten, weniger geschwächten Zahnbereich radial, also quer zur Längsrichtung des Zahnes zurückweicht, bis der treibende Zahn schließlich, bei hinreichend gestauchtem weichem Querschnittsbereich, die Last linienförmig über die volle achsparallele Breite seiner Zahnflanke übergibt.

Dieser günstige Effekt der zunächst nur punktförmig und deshalb geräuscharm einsetzenden Belastung des treibenden Zahnes wird noch gefördert, wenn zwei Belastungspunkte der anfänglichen Beanspruchung symmetrisch zur Quer-Mittenebene auf einer achsparallelen Linie auf der Zahnflanke des treibenden Zahnes liegen. Das ist dadurch zu erreichen, daß der achsparallele runde Durchbruch im Zahn eine koaxial doppelkonische Längsschnittgeometrie aufweist, wobei die kleineren Stirnflächen gegensinnig zur Mittenebene hin gerichtet sind. Vorzugsweise wird in der Umgebung der Mittenebene sogar eine zusätzliche Materialansammlung durch eine zusätzliche Einschnürung des Durchmessers des Durchgangsloches hervorgerufen, die noch über die zentrale Materialverdickung infolge des doppelkonischen Verlaufes des Durchgangsloches hinaus geht. Denn das fördert es, daß die Zahnflanke in der Umgebung des Eingriffspunktes keinen achsparallel linearen Verlauf ihrer Oberfläche aufweist, sondern einen konkaven Einfall symmetrisch zur Mittenebene der Zahndicke.

Wenn also durch entsprechend gekürzte oder stirnseitig abgerundete bzw. abgesetzte kegelstumpfförmige Spritzgußkerne in der Umgebung ihrer zur Mittenebene aufeinander zu weisenden kleinen Konusbasen eine zusätzlich den Lochquerschnitt verjüngende, etwa stufenförmige Einschnürung vorgesehen wird, führt die hier auftretende Spritzmaterialansammlung beim Erkalten des Kunststoffes im Bereiche der Mittenebene zu einer stärkeren schrumpfungsbedingten Materialeinschnürung, als in den beiden Seitenbereichen des Zahnes, und somit längs seiner Mittenebene beim Durchgangsloch zu einem quer zur Radachse orientierten, linienförmigen Einfallen der Oberfläche der Zahnflanke. Daraus resultieren bei der Kraftüberleitung zunächst zwei zur Mittenebene des Zahnes symmetrisch liegende punktförmige Anlagebereiche auf der Flanke des Zahnes, ehe diese treibende Zahnflanke in der Nachbarschaft des Loches so weit gestaucht ist, daß sie nun die Last über die volle achsparallele Breite ihrer Zahnflanke übergibt.

Zur näheren Erläuterung der erfindungsgemäßen Lösung, ihrer Vorteile und zweckmäßiger Weiterbildungen wird außer auf die weiteren Ansprüche auch auf nachstehende Beschreibung eines in der Skizze angenähert maßstabsgerecht stark vergrößert dargestellten Kunststoffzahnrades in Auslegung nach dieser Erfindung verwiesen. In der Zeichnung zeigt:
Fig. 1 ein solches Zahnrad in achsparalleler Seitenansicht und
Fig.2 das Zahnrad im Axial-Längsschnitt II.

Ein im Interesse geringen Flankenspieles auf eine Lagerbuchse 7 aufgezogenes treibendes Zahnrad 1 für ein hochtouriges kleinbauendes Kunststoffgetriebe weist Zähne 2 auf, die gegenüber einer genormten Geometrie ihrer Zahnflanken 3 radial verlängert sind. Denn ein kleiner Zahnraddurchmesser bedingt eine kleine Zahl an Zähnen 2, von denen nur noch einer lastüberegebend in Eingriff steht.

Jeder Zahn 2 ist radial außerhalb des Fußkreises 9 mit einer achsparallelen Durchbrechung in Form eines wenigstens angenähert runden Loches 4 ausgestattet. Dadurch ist der verbleibende Zahnquerschnitt zwischen Rundloch 4 und Zahnflanke 3 dort am schwächsten, wo ein getriebener Zahn mit der treibenden Zahnflanke 3 in Eingriff gerät. Die durch die nur lokal begrenzte Schwächung gegebene örtliche Elastizität führt wie oben schon angesprochen zur Dämpfung des hier sonst entstehenden und dominierenden Eingriffsgeräusches. Da der die Last übergebende Zahn 2 wegen des runden Loches 4 nicht nennenswert aus seiner radialen Orientierung ausgebogen wird, tritt auch keine Relativverdrehung zum angetriebenen Zahnrad auf, so daß dessen nächster Zahn nicht schon zu früh vor der Lastübernahme im nicht-elastischen Bereich des Zahnes 2 gegen den nächsten Zahn 2 des treibenden Rades 1 anschlägt.

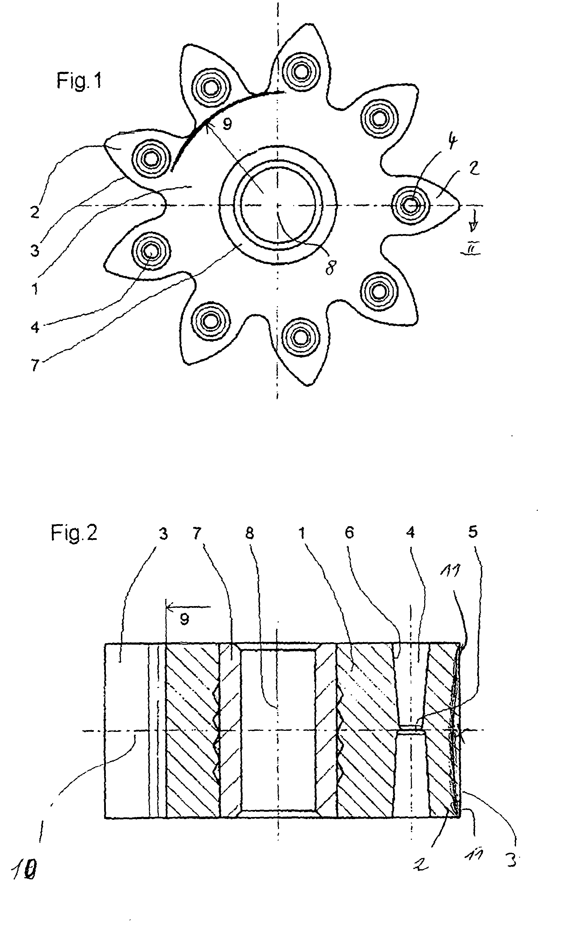

Das parallel zur Radachse 8 in den Zahn 2 eingreifende, im Querschnitt wenigstens angenähert kreisflächenförmige Durchgangs-Loch 4 weist zweckmäßigerweise nicht nur zum erleichterten Auswerfen aus der Form in einer Spritzgußmaschine im Längsschnitt eine konische Geometrie auf. Bevorzugt sind sogar gemäß Fig. 2 über die Dicke des Zahnes 2 koaxial zueinander zwei schlanke, also spitzwinkelige Kegelstümpfe 6 freigespart. Die weisen mit ihren kleinen Stirnflächen aufeinander zu und bewirken dadurch in der Mittenebene 10 der achsparallelen Zahndicke eine Einschnürung 5 des Lochdurchmessers. Diese Einschnürung 5 sollte möglichst ausgeprägt sein, etwa durch abgestufte oder stumpfkegelige Ausbildung der aufeinander zu weisenden Stirnflächen der Kegelstümpfe 6. Die dadurch beim Spritzvorgang bewirkte Ansammlung von Material in der quer zur Achse 8 orientierten Mittenebene 10 des Loches 4 hat beim Abkühlen nach dem Spritzguß zur Folge, daß am Zahnrad 1 die Flanke 3 des gelochten Zahnes 2 im Bereiche der Mittenebene 10 gegenüber den beiderseitigen Randbereichen 11 etwas radial einschrumpft, wie in der Zeichnung zur Veranschaulichung durch den konkaven Verlauf der achsparallelen Lastübergabelinie auf der Flanke 3 übertrieben veranschaulicht. Daraus resultiert, daß der von der Flanke 3 getriebene Zahn (in der Zeichnung nicht dargestellt) zunächst nur quasi punktförmig an den Randbereichen 11 in belastete Anlage gerät. Erst wenn diese Randbereiche von der Belastung hinreichend radial gestaucht sind, trägt die Flanke 3 auch im Bereich der Mittenebene 10 und somit über die gesamte Breite des treibenden Zahnes 2. Die konkave Berührungslinie auf der eingebuchteten Flanke 3 führt deshalb zu einem besonders geräuscharmen Eingriff des getriebenen Zahnes, der die Last daraufhin im nichtgeschwächten (also weniger elastischen) Bereich des Zahnes 2 übernimmt.

Jedenfalls ist festzustellen daß die erfindungsgemäße Auslegung jeweils einer auf dem Radius des Eingriffspunktes gelegenen, im wesentlichen runden achsparallelen Durchbrechung in den Zähnen 2 von kleinen Zahnrädern für hochtourige aber leise laufende Kunststoffgetriebe zu einer elastischen Zahnschwächung nur in unmittelbarer Nachbarschaft des Eingriffspunktes des getriebenen Zahnes und dadurch auch bei gegenüber einer Normgeometrie verlängerten Zahnflanken 3 im Vergleich zum Verhalten bei einem Langloch nicht zu einer geräuschfördernden Zahnverbiegung führt, sondern zu geräuschgeminderter Lastübergabe radial versetzt neben dem Loch 4 und somit im schon wieder ungeschwächten Bereich des treibenden Zahnes 2.

## Patentansprüche

1. Geräuschgedämpftes Zahnrad (1) mit einer achsparallel durch seinen Zahn (2) sich erstreckenden, abgerundet berandeten Durchbrechung in der Umgebung der radialen Höhe des Eingriffspunktes eines davon getriebenen Zahnes, **dadurch gekennzeichnet, daß** das Zahnrad (1) ein Kunststoff-Spritzgußteil ist, das mit gegenüber einer Normverzahnung verlängerten Zähnen (2) ausgestattet ist, in denen jeweils ein Durchbruch in Form eines im Querschnitt etwa wenigstens annähernd runden Loches (4) freigespart ist.

2. Zahnrad nach Anspruch 1, **dadurch gekennzeichnet, daß** die Löcher (4) im Axial-Längsschnitt schwach kegelstumpfförmig geneigt berandet sind.

3. Zahnrad nach Anspruch 2, **dadurch gekennzeichnet, daß** die Löcher (4) im Axial-Längsschnitt symmetrisch zur Mittenebene (10) der axialen Zahndicke doppelkonisch, mit ihrem kleinsten Durchmesser zur Mittenebene (10) hin gerichtet, berandet sind.

4. Zahnrad nach Anspruch 3, **dadurch gekennzeichnet, daß** die Löcher (4) im Bereich der Mittenebene (10) eine umlaufende Einschnürung aufweisen.

5. Zahnrad nach einem der Ansprüche 3 oder 4, **dadurch gekennzeichnet, daß** die achsparallel über die Zahnflanke (3) sich radial verlagernde Lastübergabelinie im Bereich deren quer zur Achse (8) orientierten Mittenebene (10) zwischen radial erhabenen Randbereichen (11) konkav verläuft.

## Claims

1. Noise-damped gearwheel (1) with a roundedly edged perforation extending axially parallel through its tooth (2) and located in the vicinity of the radial height of the engagement point of a tooth driven thereby, **characterized in that** the gearwheel (1) is a plastic injection moulding which is equipped with teeth (2) which are prolonged, as compared with a standard toothing, and in which in each case a perforation in the form of a hole (4) of at least approximately round cross section is cut out.

2. Gearwheel according to Claim 1, **characterized in that**, in axial longitudinal section, the holes (4) have a slightly frustoconically inclined edging.

3. Gearwheel according to Claim 2, **characterized in that**, in axial longitudinal section, the holes (4) have a double-conical edging, with their smallest diameter directed towards the mid-plane (10) of the axial tooth thickness, symmetrically with respect to the mid-plane (10).

4. Gearwheel according to Claim 3, **characterized in that** the holes (4) have a peripheral contraction in the region of the mid-plane (10).

5. Gearwheel according to either one of Claims 3 and 4, **characterized in that** the load transfer line shifting in the radial direction axially parallel over the tooth flank (3) runs concavely between radially raised edge regions (11) in the region of the mid-plane (10), oriented transversely with respect to the axis (8), of the said load transfer line.

## Revendications

1. Engrenage à amortissement de bruit (1) comprenant un perçage à bords arrondis s'étendant avec son axe parallèle à travers sa dent (2), dans l'environnement de la hauteur radiale du point d'engagement d'une dent entraînée, **caractérisé en ce que** l'engrenage (1) est une pièce moulée par injection de plastique qui est munie de dents (2) prolongées par rapport à une denture normale, dans lesquelles est pratiqué à chaque fois un perçage en forme de trou (4) de section transversale au moins approximativement ronde.

2. Engrenage selon la revendication 1, **caractérisé en ce que** les trous (4) présentent des bords inclinés en coupe longitudinale axiale de manière faiblement tronconique.

3. Engrenage selon la revendication 2, **caractérisé en ce que** les trous (4) présentent des bords symétriques par rapport au plan médian (10) de l'épaisseur axiale des dents, en coupe longitudinale axiale, en forme de doubles cônes, avec leur plus petit diamètre orienté vers le plan médian (10).

4. Engrenage selon la revendication 3, **caractérisé en ce que** les trous (4) présentent, dans la région du plan médian (10), un rétrécissement périphérique.

5. Engrenage selon l'une quelconque des revendications 3 ou 4, **caractérisé en ce que** la ligne de transfert de charge se décalant radialement avec son axe parallèle sur le flanc des dents (3) s'étend dans la région de son plan médian (10) orienté transversalement à l'axe (8) de manière concave entre des régions de bord rehaussées radialement (11).
